(19) Europäisches Patentamt
European Patent Office
Office européen des brevets

(11) Veröffentlichungsnummer : **0 428 529 B1**

(12) # EUROPÄISCHE PATENTSCHRIFT

(45) Veröffentlichungstag der Patentschrift :
**26.08.92 Patentblatt 92/35**

(51) Int. Cl.$^5$ : **C07F 7/22,** A01N 55/04

(21) Anmeldenummer : **89907149.2**

(22) Anmeldetag : **22.06.89**

(86) Internationale Anmeldenummer :
**PCT/EP89/00704**

(87) Internationale Veröffentlichungsnummer :
**WO 90/01033 08.02.90 Gazette 90/04**

(54) **DIORGANOZINN-VERBINDUNGEN UND DIESE ENTHALTENDE MITTEL MIT BAKTERIZIDER UND FUNGIZIDER WIRKUNG.**

(30) Priorität : **21.07.88 DE 3824807**

(43) Veröffentlichungstag der Anmeldung :
**29.05.91 Patentblatt 91/22**

(45) Bekanntmachung des Hinweises auf die Patenterteilung :
**26.08.92 Patentblatt 92/35**

(84) Benannte Vertragsstaaten :
**AT BE CH DE FR GB LI NL SE**

(56) Entgegenhaltungen :
**EP-B- 0 072 426**
**DE-A- 2 633 452**

(73) Patentinhaber : **SCHERING AKTIENGESELLSCHAFT Berlin und Bergkamen**
**Ernst-Schering-Strasse 14 Postfach 15 40**
**W-4709 Bergkamen (DE)**

(72) Erfinder : **LANDSIEDEL, Horst**
**Augustin-Wibbelt-Strasse 18**
**W-4750 Unna (DE)**
Erfinder : **PLUM, Hans**
**Sulkshege 12**
**W-4700 Hamm-Heessen (DE)**

(74) Vertreter : **Rotenberg, Klaus, Dr. c/o Schering Aktiengesellschaft**
**Postfach 15 40 Ernst-Schering-Strasse 14**
**W-4709 Bergkamen (DE)**

EP 0 428 529 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Diorganozinn-Verbindungen, die sich von N-Cyclohexyl-N'-hydroxy-diazeniumoxid ableiten, sowie Mittel mit bakterizider und fungizider Wirkung, die als Desinfektionsmittel, Holz- und Materialschutzmittel, zur bakteriziden und fungiziden Ausrüstung von Textilien, Kunststoffen, Baustoffen oder als Biozid für Anstrichsysteme geeignet sind und diese Diorganozinn-Verbindungen als Wirkstoffe enthalten.

Die hohe Wirksamkeit von Triorganozinn-Verbindungen gegen Mikroorganismen, z. B. schädliche Pilze und Bakterien, ist bekannt. Bei den Trialkylzinn-Verbindungen liegt das Wirkungsoptimum dann vor, wenn die Gesamt-C-Zahl der an das Zinnatom gebundenen Alkylgruppen 9 - 12 beträgt. Kürzere oder längere Alkylgruppen verringern die biozide Wirksamkeit. Gegenüber den Trialkylzinn-Verbindungen zeigen Dialkylzinn-Verbindungen eine sehr geringe biozide Wirkung (International Tin Research Institute, Veröffentlichung Nr. 559, 1979; Bokranz, Plum; Fortschritte der chemischen Forschung, Bd. 16, Heft 3/4, S. 377).

Eine andere Gruppe von Bioziden, die hauptsächlich als Holzschutzmittel eingesetzt wird, ist beschrieben in DE-C-1 024 743. Es handelt sich um Metallsalze von N-Alkyl-N'-hydroxy-diazeniumoxiden bzw. N-Cyclohexyl-N'-hydroxy-diazeniumoxiden (kurz als MeHDO bezeichnet). Nachteilig bei diesen Verbindungen ist, daß zum Schutz des Holzes hohe Anwendungskonzentrationen erforderlich sind und die Wirkung gegen holzverfärbende Pilze relativ gering ist.

Aus diesen Gründen wurden Mischungen von Metallsalzen des N-Cyclohexyl-N'-hydroxy-diazeniumoxids mit anderen Bioziden zur Erhöhung der Wirksamkeit bzw. Erweiterung des Wirkungsspektrums vorgeschlagen (DE-A-2 336 290, DE-A-2 341 882 und EP-B-0 072 426).

Es ist ferner bekannt, daß das Umsetzungsprodukt TBT-HDO, hergestellt aus Tri-n-butylzinnchlorid und dem Kalium-Salz des N-Cyclohexyl-N'-hydroxy-diazeniumoxids (K-HDO), eine sehr gute biozide Wirksamkeit aufweist (DE-A 2 633 452).

Es wurde nun überraschend gefunden, daß Umsetzungsprodukte von Dialkylzinnverbindungen mit N-Cyclohexyl-N'-hydroxy-diazeniumoxid (kurz als $R_2$Sn-HDO bezeichnet) eine sehr gute Wirkung gegen Bakterien und Pilze, insbesondere auch gramnegative Bakterien sowie holzzerstörende und holzverfärbende Pilze, aufweisen.

Die Erfindung betrifft Umsetzungsprodukte von Dialkylzinnverbindungen mit N-Cyclohexyl-N'-hydroxy-diazeniumoxid ($R_2$Sn-HDO) der allgemeinen Formel

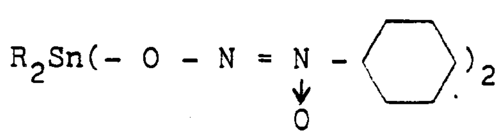

in der R ein Alkylrest mit 1 bis 12, insbesondere 3 - 8, Kohlenstoffatomen ist, vornehmlich ein n-Alkylrest wie n-Propyl-, n-Butyl-, n-Hexyl- oder n-Octyl, wobei die einzelnen Reste R gleich oder verschieden sein können. Die Di-n-butylzinn-Verbindung (R = n-Butyl; DBT-HDO) ist daher besonders bevorzugt.

Die Erfindung betrifft weiterhin bakterizide und fungizide Mittel, gekennzeichnet durch einen Gehalt an einer oder mehreren der erfindungsgemäßen Diorganozinn-Verbindungen $R_2$Sn-HDO, für den Einsatz als Holzschutzmittel, Desinfektionsmittel, Konservierungsmittel für technische Produkte sowie zur bioziden Ausrüstung von Textilien, Kunststoffen oder Baustoffen.

Die Verbindungen $R_2$Sn-HDO werden zweckmäßig in Form von Zubereitungen wie Lösungen, Emulsionen, Dispersionen mit und ohne Bindemittel oder mit festen Trägerstoffen bzw. Verdünnungsmitteln und gegebenenfalls unter Zusatz von Netz-, Haft-, Emulgier- und Dispergierhilfsmitteln angewendet.

Geeignete Lösungsmittel sind z. B. Alkohole, Testbenzine, Toluol, Xylol.

Zur Herstellung von wäßrigen Formulierungen können die erfindungsgemäßen Mittel in Form von stabilen wäßrigen Konzentraten, die übliche Emulgatoren, vorzugsweise nichtionogene Emulgatoren die Alkylarylpolyglykolether enthalten, bereitgestellt werden.

Die erfindungsgemäßen Mittel lassen sich ausgezeichnet in Form von Formulierungen, insbesondere für den Holzschutz, einsetzen, z. B. für frisch geschlagenes Holz, das leicht von Bakterien und Pilzen wie Aspergillus- und Trichoderma-Arten befallen wird; ebenso sind sie zur Behandlung von Bauholz geeignet, das durch die biozide Wirkung der erfindungsgemäßen Wirkstoffe gegen holzzerstörende Pilze und auch gegen Bakterienbefall geschützt wird.

Des weiteren eignen sich die erfindungsgemäßen Mittel zur bioziden Ausrüstung von wäßrigen Anstrichsystemen, z. B. Dispersionen, hinsichtlich Topfkonservierung und auch zum Schutz gegen Befall des Anstrichs durch Bakterien und Pilze, insbesondere auch gegen den Befall von wäßrigen Holzanstrichsystemen, z.

B. Alkydharzdispersionen, durch Bläuepilze.

Ebenso können wäßrige Formulierungen zur bioziden Ausrüstung verschiedener Materialien wie Papier, Pappe, Kunststoffe, Textilien, Klebstoffe, Baustoffe und Leder eingesetzt werden.

Ein weiteres Einsatzgebiet ist die Ausrüstung von Wasserflotten gegen unerwünschte Mikroorganismen, z. B. für Kreislaufkühlwasser, Fabrikationswasser bei der Papierproduktion oder Bohr- und Schneidöle.

Die Wirkstoff-Konzentrationen liegen in Abhängigkeit vom Anwendungsgebiet im Bereich von 0,1 - 5 % (Holzschutz), 0,05 - 3 % (Ausrüstungen von Anstrichsystemen, Papieren, Textilien, Baustoffen usw.) oder 0,0001 - 0, 2 % (Kühl- und Fabrikatonswasser, Bohr- und Schneidöle).

Zur Verbreiterung des Wirkungsspektrums, zur Erzielung besonderer Wirkung gegen spezielle Mikroorganismen oder zur insektiziden Ausrüstung lassen sich die erfindungsgemäßen Verbindungen mit anderen Wirkstoffen kombinieren. Als solche Wirkstoffe eignen sich u. a.:
Kupfernaphthenat, Kupfer-8-oxichinolin, N,N'-Dimethyl-N'-phenyl-N'-fluordichlormethylthiosulfonyldiamid, N-Cyclohexyl-N-methoxy-2,5-dimethylfuran-3-carbonsäureamid, 3-Jod-2-propynylbutyl-carbamat, Benzimidazol-2-carbaminsäure-methylester, N-Trichlormethylthiophthalimid, 1-{[2-(2,4-dichlorphenyl)-1,3-dioxolan-2-yl]methyl}-1H-1,2,4-triazol, γ-Hexachlorcyclohexan und synthetische Pyrethroide wie 3-(2,2-Dichlorvinyl-2,2-dimethyl)cyclopropan-1-carbonsäure-α-cyano-3-phenoxybenzylester.

Das Auf- bzw. Einbringen der Mittel kann in beliebiger Weise, z. B. durch Streichen, Sprühen, Tauchen oder durch industrielle Verfahren wie Druck- bzw. Vakuum-Imprägnierung, erfolgen.

Die Herstellung der erfindungsgemäßen Verbindungen erfolgt nach folgender Reaktionsgleichung.

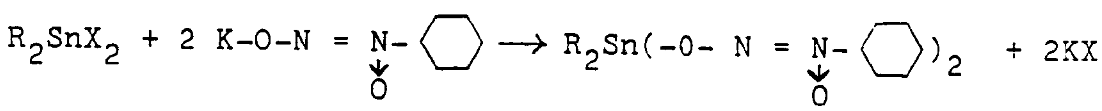

(X = Halogen)

Erfindungsgemäß setzt man Diorganozinn-halogenide $R_2SnX_2$ mit Akalisalzen des N-Cyclohexyl-N'-hydroxy-diazeniumoxids (Me-HDO) bei Temperaturen von 50 - 60 °C in wäßriger alkoholischer Lösung oder organischen Lösungsmitteln wie z. B. Hexan um , wobei das Produkt in der organischen Phase anfällt. Die Ausgangsprodukte sind nach bekannten Verfahren herstellbar (International Tin Research Institute, Veröffentlichung Nr. 559, 1979; Bokranz, Plum; Fortschritte der chemischen Forschung, Bd. 16, Heft 3/4, S. 377; DE-A-26 33 452) bzw. im Handel erhältlich (SCHERING AG, BASF).

Die erfindungsgemäßen Diorganozinn-Verbindungen $R_2Sn$-HDO weisen überraschenderweise ein breites Wirkungsspektrum mit guter Wirkung sowohl gegen grampositive als auch gramnegative Bakterien sowie gegen holzzerstörende und holzverfärbende Pilze auf (Tab. 1 und 2). Insbesondere gilt dies auch für Verbindungen mit Alkylresten, die mehr als 4 C-Atome enthalten, z. B. Di-n-octylzinnverbindung. Dies ist insbesondere überraschend, da z. B. Tri-n-octylzinn-Verbindungen im Unterschied zu Tri-n-butylzinn-Verbindungen keine biozide Wirkung zeigen.

Bemerkenswert ist die gegenüber Triorganozinn-Verbindungen erheblich niedrigere Umweltbeeinträchtigung der erfindungsgemäßen Verbindungen:

| | Gewichtsverlust 6 Tg.65°C) in % | $LD_{50}$ p.o. (Ratte) in mg/kg Körpergewicht | $EC_{50}$ (Goldorfen* | Daphnien**) |
|---|---|---|---|---|
| | | | in mg/l Wasser | in mg/l Wasser |
| TBT-HDO | 12,8 | 63 | 0,035 | 0,020 |
| DBT-HDO | 2,3 | 250 - 500 | 0,18 | 4,9 |

*) bestimmt nach DIN 38412, Teil 15

**) bestimmt nach DIN 38412, Teil 12.

Wie die vorliegende Gegenüberstellung zeigt, wird beispielsweise von TBT-HDO bei 6-tägiger Lagerung bei 65 °C eine fast sechsmal höhere Menge an die Umgebung abgegenen als bei dem erfindungsgemäßen DBT-HDO.

Wie die $LD_{50}$-Werte (p. o. Ratte) ausweisen, zeigt das erfindungsgemäße DBT-HDO auch eine erheblich geringere Warmblütertoxizität als TBT-HDO.

Die Toxizität gegenüber Fischen und Daphnien ist bei den erfindungsgemäßen Diorgenozinn-Verbindungen $R_2Sn$-HDO um Größenordnungen geringer als bei den Triorganozinn-Verbindungen $R_3Sn$-HDO.

Damit erweisen sich die erfindungsgemäßen Verbindungen als ausgezeichnete Wirkstoffe für biozide Mittel mit breitem Wirkungsspektrum gegen Schadorganismen bei gleichzeitig geringer Umweltbelastung.

Beispiel 1

Herstellung von Bis(N-cyclohexyl-diazeniumdioxi)di-n-butylzinn (DBT-HDO)

Zu einer Lösung von 151,9 g (0,5 Mol) Di-n-butylzinnchlorid (DBTCl) in 500 ml Methanol werden innerhalb von ca. 20 min 182,3 g (1 Mol) des Kaliumsalzes von N-Cyclohexyl-N'-hydroxy-diazeniumoxid in Form einer 30 %igen wäßrigen Lösung gegeben. Anschließend wird die Mischung 1 h bei 50 - 60 °C gerührt. Dabei scheidet sich im unteren Teil des Reaktionsgefäßes eine ölige Phase ab, die nachfolgend abgetrennt und in 500 ml Heptan aufgenommen wird. Nach Trocknung mit wasserfreiem Natriumsulfat und Filtration wird das Lösungsmittel unter Vakuum abdestilliert. Als Rückstand verbleibt ein festes, schwach gefärbtes, pulvriges Produkt der Formel

$$(n\text{-}C_4H_9)_2Sn(-O - N = \underset{\substack{\downarrow \\ O}}{N} - C_6H_{11})_2$$

Ausbeute: 222 g (85,5 % d. Th.)
Analyse für $C_{20}H_{40}N_4O_4Sn$ (MG: 519,26):
berechnet:
C:46.26 %; H:7,77 %; N:10,79 %; O:12,32 %; Sn:22:86 %
gefunden:
C:46,12 %; H:7,71 %; N:10,88 %; O:12,40 %; Sn:22,90 %

Beispiel 2

Herstellung von Dis(N-cyclohexyl-diazeniumdioxi)di-n-pentylzinn (DPT-HDO)

Die Herstellung erfolgte analog zu Beispiel 1 aus 0,5 Mol Di-n-pentylzinndichlorid und 1 Mol N-Cyclohexyl-N'-hydroxy-diazeniumoxid.

$$(n\text{-}C_5H_{11})_2Sn(-O-N=\underset{\substack{\downarrow\\ O}}{N}-C_6H_{11})_2$$

DPT-HDO ist eine ölige, gelbe Flüssigkeit.
Ausbeute: 237 g (86,6 % d. Th.)
Analyse für $C_{22}H_{44}N_4O_4Sn$ (MG 547,31):
berechnet:
C:48,28 %; H:8,10 %; N:10,24 %; 0:11,69 %; Sn:21,69 %
gefunden:
C:48,43 %; H:8,03 %; N:10,11 %; 0:10,60 %; Sn:21,83 %

Beispiel 3

Herstellung von Bis(N-cyclohexyl-diazeniumdioxi)di-n-octylzinn (DOT-HDO)

Die Herstellung erfolgte analog zu Beispiel 1 aus 0,5 Mol Di-n-octylzinndichlorid und 1 Mol N-cyclohexyl-N'-hydroxydiazeniumoxid.

$$(n\text{-}C_8H_{17})_2Sn(-O-N=\underset{\substack{\downarrow\\ O}}{N}-C_6H_{11})_2$$

DOT-HDO ist eine ölige, gelbe Flüssigkeit.
Ausbeute: 261,7 g (82,9 % d. Th.)
Analyse für $C_{28}H_{56}N_4O_4Sn$ (MG: 631,47):
berechnet:
C:53,26 %; H:8,94 %; N:8,87 %; 0:10,13 %; Sn:18,80 %
gefunden:
C:52,35 %; H:8,82 %; N:8,96 %; 0:10,24 %; Sn:18,63 %

Bakterizide Wirkung

Die bakterizide Prüfung der erfindungsgemäßen Verbindung DBT-HDO (vgl. Beispiel 1) erfolgte im Agar-Diffusionstest (vgl. Tabelle 1). DST-Agar wurde mit 1 Tropfen einer 1 : 10 verdünnten Müller-Hinton-Brühe der Testkeime inokuliert. Nach 2 Stunden Prädiffusion bei 22 °C wurden die mit unterschiedlich konzentrierten Wirkstofflösungen getränkten Papierfilter aufgelegt. Nach 24-stündiger Bebrütung erfolgte die Bestimmung der Hemmhöfe (Abstand der Trübung vom Papierfilterrand in mm).

Fungizide Wirkung

Die Hemmwirkung der erfindungsgemäßen Produkte gegen Pilze wurde im "Filter-Auflegetest" geprüft (vgl. Tabelle 2). Hierzu wurden Papierrundfilter (∅ 5,5 cm) in ethanolischen Lösungen mit verschiedenen Wirkstoffgehalten getränkt. Nach dem Trocknen bei Raumklima kamen die Filter in Petri-Schalen auf Plate-count-Agar, das mit einer Sporen suspension beimpft war. Als Nährmedium diente Biomalz-Agar 8° Bg, die Bebrütung dauerte 3 Wochen bei +30 °C. Danach wurden die Größen der Hemmzonen (Abstand des Pilzbewuchses vom Filterrand in mm) um die Proben bestimmt.

Zum Vergleich der fungiziden Wirkung gegen Basidiomyceten wurden in Anlehnung an DIN 52 176 Klötzchen aus Kiefernsplintholz (5 cm x 2,5 cm x 1,5 cm, Faserrichtung 5 cm) mit Lösungen abgestufter Konzentration des Wirkstoffs DBT-HDO (vgl. Beispiel 1) in Aceton getränkt.

Zu Vergleichszwecken wurden die Ausgangsstoffe Di-n-butylzinndichlorid und das K-Salz des N-Cyclohexyl-N'-hydroxy-diazeniumoxid in die Untersuchungen einbezogen.

Die getränkten Klötzchen lagerten 4 Wochen in einem Klimaraum mit 20 °C Lufttemperatur und 65 % relativer Luftfeuchte. Danach wurden sie einer Auswaschung gemäß DIN EN 84 unterworfen. Nach dem Trocknen wurden die behandelten Klötzchen zusammen mit je einem unbehandelten Vergleichsklötzchen auf einer Reinkultur von Coniophora puteana in Kolle-Schalen eingebaut und so dem Angriff des Pilzes 16 Wochen

bei 22 °C und 70 % relativer Luftfeuchte ausgesetzt. Die Einwirkung der Pilze auf die einzelnen Klötzchen wurde durch Berechnung der Gewichtsverluste (bezogen auf die Trockengewichte) ermittelt. Die so ermittelten Grenzwerte, die durch zwei Zahlen ausgedrückt werden, von denen die kleinere die höchste Schutzmittelmenge (in kg/m³ Holz) ist, bei der noch ein Angriff erfolgt ist (Gewichtsverlust > 3 %), und die größere die niedrigste Menge, von der ab kein Angriff mehr erfolgt ist, sind in Tabelle 3 aufgeführt.

Tabelle 3

Grenzwerte gegen Coniophora puteana nach Auswaschungsbeanspruchung kg Produkt je m³ Holz

| | |
|---|---|
| Di-n-butylzinndichlorid | 2,8 - 4,4 |
| K-HDO | 1,8 - 3,4 |
| DBT - HDO | 0,51 - 0,88 |

Tabelle 1 Ergebnis der bakteriziden Prüfung im Agar-Diffusionstest (Hemmhof in mm)

| lfd. Nr. | Wirkstoff | Wirkstoff-konzentration der Tränklösung in % | grampositiv Bacillus subtilis | grampositiv Staphilococcus aureaus | gramnegativ Proteus vulgaris | gramnegativ Escherichia coli |
|---|---|---|---|---|---|---|
| 1 | TBT Cl | 0,5 | 19 | 25 | 5 | 0 |
| 2 | TBT-HDO | 0,5 | 18 | 24 | 7 | 0 |
| 3 | DBT-HDO | 0,5 | 15 | 10 | 12 | 3 |
| 4 | K-HDO | 0,5 | 9 | 19 | 0 | 0 |
| 5 | TBT Cl | 0,3 | 18 | 25 | 5 | 0 |
| 6 | TBT-HDO | 0,3 | 22 | 32 | 7 | 0 |
| 7 | DBT-HDO | 0,3 | 11 | 10 | 13 | 2 |
| 8 | K-HDO | 0,3 | 4 | 14 | 0 | 0 |
| 9 | TBT Cl | 0,1 | 19 | 31 | 5 | 0 |
| 10 | TBT-HDO | 0,1 | 17 | 28 | 6 | 0 |
| 11 | DBT-HDO | 0,1 | 6 | 8 | 12 | 0 |
| 12 | K-HDO | 0,1 | 4 | 8 | 0 | 0 |
| 13 | O-Probe | - | 0 | 0 | 0 | 0 |

Bewertung 0: keine Hemmwirkung

Tabelle 2 Auflegetest gegen Pilze (Bestimmung der Hemmzonen (HZ) um die Proben in mm (+ = leichter Bewuchs, ++ = mittlerer Bewuchs, +++ = völliger Bewuchs der Probe, - = kein Bewuchs)

| Wirkstoff | %-Gehalt der Lösung | Cladosporum herbarum HZ | Cladosporum herbarum Bew. | Lentinus lepideus HZ | Lentinus lepideus Bew. | Poria monticola HZ | Poria monticola Bew. | Paecilomyces varioti HZ | Paecilomyces varioti Bew. |
|---|---|---|---|---|---|---|---|---|---|
| Kaliumsalz des N-Hydroxy-N-cyclohexyl-diazeniumoxid | 2 | 10-12 | - | >15 | - | 10-12 | - | 8-10 | - |
| | 1 | 8-10 | - | 10-12 | - | 6- 8 | - | 6- 8 | - |
| | 0,5 | 4- 6 | - | 4- 6 | - | 2- 3 | - | 5- 7 | - |
| Di-n-Butylzinn-dichlorid | 2 | 0 | ++ | 0 | + | 0 | + | 0 | ++ |
| | 1 | 0 | ++ | 0 | ++ | 0 | + | 0 | ++ |
| | 0,5 | 0 | +++ | 0 | +++ | 0 | +++ | 0 | +++ |
| Di-n-octylzinn-dichlorid | 2 | 0 | +++ | 0 | ++ | 0 | + | 0 | +++ |
| | 1 | 0 | +++ | 0 | +++ | 0 | ++ | 0 | +++ |
| | 0,5 | 0 | +++ | C | +++ | 0 | +++ | 0 | +++ |
| Produkt aus Beispiel 1 DBT-HDO | 2 | 8-10 | - | >15 | - | 12-15 | - | 10-12 | - |
| | 1 | 5- 6 | - | >15 | - | 12-12 | - | 8-10 | - |
| | 0,5 | 3- 5 | - | >15 | - | 6- 8 | - | 6- 8 | - |
| Produkt aus Beispiel 2 DPT-HDO | 2 | 6- 8 | - | >15 | - | 10-12 | - | 10-12 | - |
| | 1 | 5- 7 | - | >15 | - | 8-10 | - | 8-10 | - |
| | 0,5 | 2- 3 | - | >15 | - | 6- 8 | - | 6- 8 | - |
| Produkt aus Beispiel 3 DOT-HDO | 2 | >15 | - | >15 | - | 8-10 | - | 10-12 | - |
| | 1 | 12-15 | - | >15 | - | 8-10 | - | 8-10 | - |
| | 0,5 | 10-12 | - | >15 | - | 5- 6 | - | 5- 6 | - |
| TBT-HDO | 2 | >15 | - | >15 | - | 15 | - | >15 | - |
| | 1 | >15 | - | >15 | - | 15 | - | >15 | - |
| | 0,5 | 10-12 | - | >15 | - | 7- 9 | - | 10-12 | - |
| 0-Probe | - | 0 | +++ | 0 | +++ | 0 | +++ | 0 | +++ |

Formulierungsbeispiel 1

Eine farblose, wenig Bindemittel enthaltende Holzschutzgrundierung, bestehend aus

| | | |
|---|---|---|
| 2,5 | Gew.-Tl. | Reaktionsprodukt aus Beispiel 1, |
| 0,2 | " | Permethrin (cis: trans-Verhältnis 25 : 75), |
| 5 | " | Diäthylenglykolmonobutyläther, |
| 6 | " | langöliges Alkydharz, |
| 86,3 | " | Testbenzin, |

zeigt ein gutes Eindringvermögen und läßt sich z. B. durch Tauchen oder Streichen in Mengen von 100 - 200 g/m$^2$ auf die Holzoberfläche aufbringen.

Formulierungsbeispiel 2

Eine farbige Holzschutz-Lasur, bestehend aus

| | | |
|---|---|---|
| 3 | Gew.-Tl. | Reaktionsprodukt aus Beispiel 3, |
| 25 | " | langöliges Alkylharz (33 % Phthalatharz ca. 67 % Triglyceride pflanzlicher Fette), |
| 0,5 | " | Sikkative (Co-, Mn-, Pb-Salze), |
| 7,8 | " | Eisenoxidrotpaste, |
| 0,7 | " | Eisenoxidschwarzpaste, |
| 5 | " | Diäthylenglykolmonobutyläther, |
| 58 | " | Testbenzin, |

ist geeignet zum Anstrich maßhaltiger Holzbauteile wie z. B. Fensterrahmen, Türen usw..

Formulierungsbeispiel 3

Eine Wirkstofflösung zur bioziden Ausrüstung von Textilien, z. B. Bauwollsegeltuch, bestehend aus

| | | |
|---|---|---|
| 3,0 | Gew.-Tl. | Reaktionsprodukt aus Beispiel 1, |
| 3,4 | " | mikronisiertes Polyethylenwachs, |
| 95,6 | " | geruchsarmes, synthetisches Isoparaffin, |

läßt sich durch-Sprühen der Lösung oder durch Tauchen oder Tränken der zu behandelnden Materialien applizieren.

Formulierungsbeispiel 4

Eine wasserverdünnbare Formulierung, bestehend aus

| | | |
|---|---|---|
| 30 Gew.-Tl. | Reaktionsprodukt aus Beispiel 2, |
| 48 " | nichtionogener Emulgator, (Mischung von Carbonsäurepolyglykolestern), |
| 22 " | Wasser, |

in der angegebenen Reihenfolge unter Rühren gemischt, ergibt eine mit Wasser verdünnbare Zubereitung, die in Konzentrationen von 1 - 3 Gew.-% z. B. zur fungiziden Ausrüstung von Dispersionen eingesetzt werden kann.

## Patentansprüche

1. Umsetzungsprodukte von Dialkylzinnverbindungen mit N-Cyclohexyl-N'-hydroxy-diazeniumoxid der allgemeinen Formel

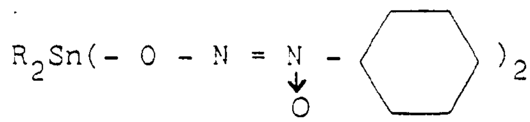

in der R ein Alkylrest mit 1 bis 12 Kohlenstoffatomen ist, wobei die Reste gleich oder verschieden sein können.

2. Dialkylzinn-Verbindungen gemäß Anspruch 1, dadurch gekennzeichnet, daß R ein n-Alkylrest mit 3 bis 8 Kohlenstoffatomen ist.

3. Dialkylzinn-Verbindungen gemäß Anspruch 1, dadurch gekennzeichnet, daß R n-Butyl ist.

4. Bakterizide und fungizide Mittel, dadurch gekennzeichnet, daß sie neben flüssigen oder festen Trägerstoffen eine oder mehrere Verbindungen der Ansprüche 1 bis 3 als Wirkstoff enthalten.

5. Holzschutzmittel, dadurch gekennzeichnet, daß sie neben flüssigen oder festen Trägerstoffen eine oder mehrere Verbindungen der Ansprüche 1 bis 3 als Wirskstoff enthalten.

6. Verwendung der Mittel gemäß den Ansprüchen 4 und 5 für den Einsatz als Holzschutzmittel, Desinfektionsmittel, Konservierungsmittel für technische Produkte und zur bioziden Ausrüstung von Textilien, Kunststoffen und Baustoffen.

## Claims

1. Reaction products of dialkyltin compounds with N-cyclohexyl-N'-hydroxydiazenium oxide of the general formula

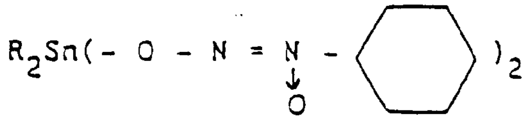

in which R is an alkyl radical having from 1 to 12 carbon atoms, it being possible for the radicals to be identical or different.

2. Dialkyltin compounds according to claim 1, characterised in that R is an n-alkyl radical having from 3 to 8 carbon atoms.

3. Dialkyltin compounds according to claim 1, characterised in that R is n-butyl.

4. Bactericidal and fungicidal agents, characterised in that they contain, in addition to liquid or solid carriers, one or more compounds of claims 1 to 3 as active ingredient.

5. Agents for the protection of wood, characterised in that they contain, in addition to liquid or solid carriers, one or more compounds of claims 1 to 3 as active ingredient.

6. Use of the agents according to claims 4 and 5 for application as agents for the protection of wood, as disinfectants, and as preservatives for industrial products, and for imparting biocidal properties to textiles, plastics and building materials.

## Revendications

1. Produits provenant de la réaction de composés dialkyl-stanniques avec l'oxyde de N-cyclohexyl-N′-hydroxydiazénium, produits qui répondent à la formule suivante :

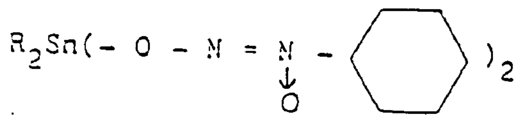

dans laquelle les R représentent chacun, indépendamment l'un de l'autre, un radical alkyle contenant de 1 à 12 atomes de carbone.

2. Composés dialkylstanniques selon la revendication 1, caractérisés en ce que R représente un radical n-alkyle contenant de 3 à 8 atomes de carbone.

3. Composés dialkylstanniques selon la revendication 1, caractérisés en ce que R représente un radical n-butyle.

4. Produits bactéricides et fongicides caractérisés en ce qu'ils contiennent, en plus de supports liquides ou solides, un ou plusieurs composés selon l'une quelconque des revendications 1 à 3, en tant que matières actives.

5. Produits pour la protection du bois caractérisés en ce qu'ils contiennent, en plus de supports liquides ou solides, un ou plusieurs composés selon l'une quelconque des revendications 1 à 3, en tant que matières actives.

6. Applications des produits selon l'une des revendications 4 et 5 comme produits pour la protection du bois, comme désinfectants, comme agents de conservation pour des produits techniques, et pour l'ennoblissement biocide de textiles, de matières plastiques ou de matériaux de construction.